# EUROPEAN PATENT SPECIFICATION

(11) **EP 1 954 956 B1**
(45) Date of publication and mention of the grant of the patent: **06.01.2010**
(21) Application number: 06851323.3
(22) Date of filing: 15.11.2006
(51) Int. Cl.: F16D 61/00, B60T 1/00, B60T 13/58, B60T 13/74

(54) **ELECTROMECHANICAL BRAKING SYSTEM WITH ELECTRICAL ENERGY BACK-UP AND REGENERATIVE ENERGY MANAGEMENT**
ELEKTROMECHANISCHES BREMSSYSTEM MIT FUNKTION ZUM SPEICHERN ELEKTRISCHER ENERGIE UND REGENERATIVER ENERGIEVERWALTUNG
SYSTÈME DE FREINAGE ÉLECTROMÉCANIQUE AVEC RÉSERVE D'ÉNERGIE ÉLECTRIQUE ET GESTION D'ÉNERGIE DE RÉCUPÉRATION

(30) Priority: 30.11.2005 US 292334
(43) Date of publication of application: 13.08.2008
(73) Proprietor: Goodrich Corporation, Charlotte, NC 28217-4578 (US)
(72) Inventor: RALEA, Mihai, Boonton Township, New Jersey 07005 (US)
(74) Representative: Hilleringmann, Jochen
(86) International application number: PCT/US2006/060901
(87) International publication number: WO 2007/136418

(56) References cited:
- DE-A1- 10 054 368
- DE-A1- 10 305 357
- US-A- 6 003 640
- US-B1- 6 296 325
- US-B1- 6 662 907
- US-B2- 6 402 259

## Description

### Technical Field

The present invention relates generally to brake systems for vehicles, and more particularly to an electromechanical braking system suitable for use in aircraft.

### Background of the Invention

Various types of braking systems are known. For example, hydraulic, pneumatic and electromechanical braking systems have been developed for different applications. In the past, however, integration of electromechanical braking systems into vehicles such as aircraft has proven difficult.

An aircraft presents a unique set of operational and safety issues. For example, if one or more engines fail on an aircraft, it is quite possible that there will be a complete or partial loss of electrical power. In the case of an electromechanical braking system, issues arise as to how the brakes will be actuated in an emergency takeoff or landing.

In addition, electromechanical braking systems have a tendency to produce regenerative electrical energy. To date, this energy has not been managed other than to dissipate the energy as heat, which leads to power usage inefficiencies and heating of an electronic enclosure for electrical system components of the electromechanical braking system.

DE 10 054 368 discloses a system and method according to the preamble of claims 1, 12 and 14.

### Summary of the Invention

The invention provides an electromechanical system where a controller generates an electrical drive signal for an actuator using power from a power source. A capacitor stores electrical energy and avails the stored energy to the controller when a voltage potential of the stored electrical energy is higher than the supply voltage of the power source. The stored electrical energy may originate from the power source and/or regenerative energy produced by the actuator.

According to one aspect of the invention, an electromechanical braking system for effecting braking of a wheel of an vehicle includes an electromechanical actuator controller that generates an electrical drive signal for an electromechanical actuator in response to a braking command. The electromechanical actuator controller is configured to receive power for the electrical drive signal from a conductor that couples the electromechanical actuator controller to a DC supply voltage power source. A capacitive energy storage device is configured to store electrical energy from the conductor and supply stored energy to the electromechanical actuator controller for electrical drive signal generation when a voltage potential of the stored electrical energy is higher than the DC supply voltage.

According to another aspect of the invention, an electromechanical braking system for effecting braking of a wheel of an vehicle includes an electromechanical actuator controller that generates an electrical drive signal for an electromechanical actuator in response to a braking command. The electromechanical actuator controller is configured to receive power for the electrical drive signal from a conductor that couples the electromechanical actuator controller to a DC supply voltage power source. The electromechanical actuator controller is configured to receive regenerative electrical energy from the electromechanical actuator and couple the regenerative electrical energy to the conductor; and a capacitive energy storage device is configured to store the regenerative electrical energy that has been coupled to the conductor.

According to yet another aspect of the invention, there is provided a method of providing braking in an electromechanical braking system for a vehicle that includes an electromechanical actuator controller configured to receive power from a conductor that couples the electromechanical actuator controller and a DC supply voltage power source. The method includes the steps of generating an electrical drive signal with the electromechanical actuator controller for an electromechanical actuator in response to a braking command using power from the conductor; capacitively storing energy from the conductor; and supplying the stored energy to the electromechanical actuator controller for electrical drive signal generation when a voltage potential of the stored electrical energy is higher than the DC supply voltage.

According to still another aspect of the invention, a method of providing braking in an electromechanical braking system for a vehicle that includes an electromechanical actuator controller configured to receive power from a conductor that couples the electromechanical actuator controller and a DC supply voltage power source, includes the steps of generating an electrical drive signal with the electromechanical actuator controller for an electromechanical actuator in response to a braking command using power from the conductor; and capacitively storing regenerative electrical energy from the electromechanical actuator.

The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### Brief Description of the Drawings

FIG. 1 is an environmental view of an exemplary electromechanical braking system in an aircraft in accordance with the present invention;
FIG. 2 is a general block diagram of the exemplary electromechanical braking system of FIG. 1 in accordance with the present invention;
FIG. 3 is a schematic view of the exemplary braking system of FIG. 2, showing an electromechanical actuator, an electromechanical actuator controller and a brake disk stack;
FIG. 4 is a cross-sectional view of an exemplary electromechanical brake actuator useful in the system of FIG. 3;
FIG. 5 is a block diagram of the electromechanical brake actuator and electromechanical actuator controller of FIG. 3 together with a regenerative energy management circuit in accordance with the present invention; and
FIG. 6 is a block diagram of an exemplary electromechanical braking system configuration with regenerative energy management in accordance with the present invention.

It will be understood that features that are described and/or illustrated with respect to one embodiment may be used in the same way or in a similar way in one or more other embodiments and/or in combination with or instead of the features of the other embodiments.

### Detailed Description of the Invention

The present invention will now be described with reference to the drawings, wherein like reference labels are used to refer to like elements throughout.

Described is an electromechanical braking system that includes an electromechanical brake actuator for converting an electrical drive signal into mechanical energy to effect braking on a wheel of a vehicle. The electromechanical brake actuator is operative based at least in part on a DC supply voltage typically provided by a main supply source. The system further includes an electrical energy back-up system. The back-up system capacitively stores electrical energy and provides the stored electrical energy as the DC supply voltage in an absence of the main supply source.

As a result, the electromechanical braking system remains operational even in the event of complete or partial loss of power within the vehicle. In the case of an aircraft, the back-up system stores sufficient power to provide braking in a variety of circumstances.

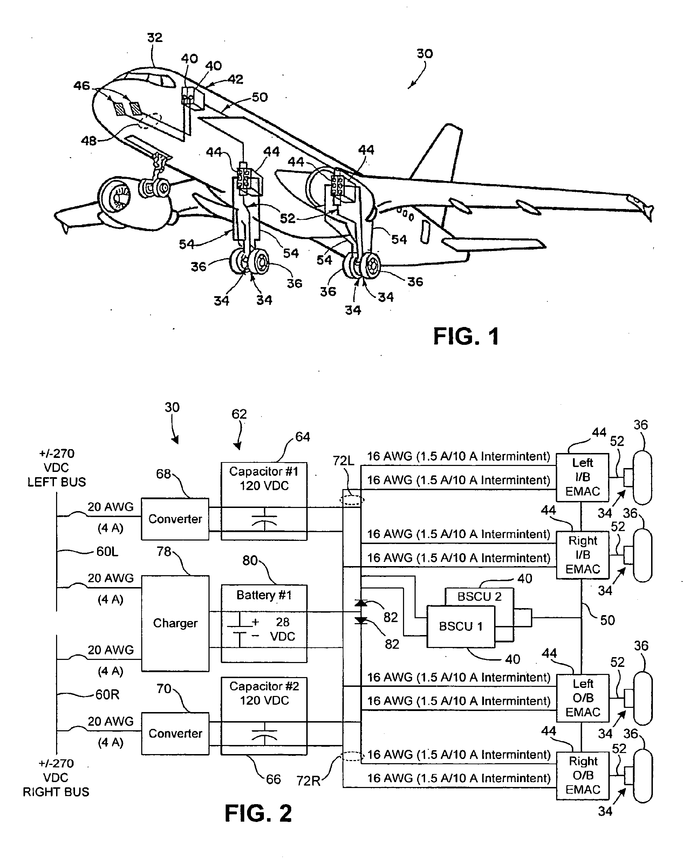

Referring initially to FIG. 1, an electromechanical braking system 30 in accordance with the present invention is shown within a jet aircraft 32. The system 30 may be designed as a brake-by-wire system compatible with the performance, safety, electrical and mechanical interfaces, redundancy, and other requirements of an aircraft such as a commercial transport. Details of such type systems can be found in commonly assigned U.S. Patent Nos. 6,003,640, 6,296,325, 6,402,259 and 6,662,907, for example.

The system 30 preferably operates based on power provided from a plurality of power sources. Power is preferably segregated within the system 30 such that the system 30 is capable of providing satisfactory braking even upon failure of one or more power sources. Moreover, the system 30 preferably has built in redundancy which allows the system 30 to continue to operate satisfactorily even in the case of failure of one or more system components.

In the exemplary embodiment, the system primary components include four electromechanical brake actuators 34. The aircraft 32 in the present embodiment includes a pair of wheels 36 mounted to a landing gear under the left wing of the aircraft and a pair of wheels 36 mounted to a landing gear under the right wing of the aircraft. Each wheel 36 includes a respective brake actuator 34 for providing braking action thereto.

The system 30 preferably further includes redundant digital brake system control units (BSCUs) 40. The BSCUs 40 carry out the brake control and antiskid processing functions. The BSCUs 40 are located in the electronics bay 42 of the aircraft 32, and preferably are packaged into one enclosure with a firewall therebetween.

The system 30 also includes four electromechanical actuator controllers (EMACs) 44 which convert brake clamp force commands from the BSCUs 40 to servo motor control signals which ultimately provide actuator braking forces. The EMACs 44 preferably are packaged similar to the BSCUs 40, with two EMACs 44 per enclosure located near the top of the gear strut of each respective landing gear.

A pilot of the aircraft 32 provides brake commands to the braking system 30 via a pair of left and right brake pedal transducers 46 included in the cockpit. The transducers 46 provide brake command signals to the BSCUs 40 which are proportional to the desired amount of braking. The output of each transducer 46 is coupled to the BSCUs 40 via a cable 48. Communications between the BSCUs 40 and the EMACs 44 occur over a communication bus 50 connected therebetween. Each of the EMACs 44 is designed to provide electrical power to the electromechanical actuators within the corresponding brakes 34 via a respective power cable 52.

In addition, each brake actuator 34 may have an associated torque sensor and wheel speed sensor (not shown). The outputs of the sensors are provided to the respective EMACs 44 via cables 54. The EMACs 44 condition the signals and provide them to the BSCUs 40 as feedback signals to carry out the brake control and antiskid processing functions.

As will be generally understood by those having ordinary skill in the art of electromechanical braking systems, the BSCUs 40, EMACs 44 and brake actuators 34 are powered and/or driven based on one or more electrical power sources. The electrical power serves to power the corresponding circuitry within the BSCUs 40 and EMACs 44, as well as directly or indirectly provide drive signals for driving the ram within the actuators 34, etc.

Thus, regardless of the particular architecture of the braking system 30, e.g., number of BSCUs 40, number of EMACs 44, number of brake actuators 34, number of individual power sources, degrees of redundancy, etc., the braking system 30 will require at least one power source so as to render the system 30, and the brake actuators 34 particularly, operative.

Accordingly, the braking system of the present invention is described herein in accordance with a particular exemplary architecture. However, those having ordinary skill in the art will appreciate that the particular architecture is not germane to the invention in its broadest sense. Rather, the invention relates to the manner in which an electrical energy back-up is provided within the system so as to ensure operating power is available to the braking system even in the event a power source was to fail.

Turning now to FIG. 2, a simplified block diagram of the braking system 30 is shown. In the exemplary embodiment, the aircraft 32 includes multiple DC power busses 60L and 60R serving as respective main supply sources. The power busses 60L and 60R are independent from one another in that if one buss was to fail, the other buss would remain functional. The busses 60L and 60R in the exemplary embodiment are at ±270 volts DC, although the system certainly could be designed to operate at some other voltage without departing from the scope of the invention.

The braking system 30 includes an electrical energy back-up system 62 which serves to ensure operating power is available to the braking system 30 even in the event either of the power busses 60L or 60R was to fail. The back-up system 62 includes a first capacitor bank 64 and a second capacitor bank 66. In addition, the back-up system includes a first converter 68 and a second converter 70.

The power buss 60L supplies DC power to the input of the first converter 68. In the exemplary embodiment, the first converter 68 is a DC-to-DC converter which converts the voltage from the power buss 60L to 120 VDC and outputs the converted voltage across supply rails 72L. Similarly, the power buss 60R supplies DC power to the input of the second converter 70. The second converter 70 is a DC-to-DC converter which converts the voltage from the power buss 60R to 120 VDC and outputs the converted voltage across supply rails 72R.

In other embodiments, the buss 60 can supply other DC voltages or an AC voltage, such as 115VAC, 3 phase at 400 Hz or at a "wild" frequency. Corresponding suitable modifications to the converters 68, 70 can be made to support alternative supply voltages. Also, in other embodiments, the voltage across the supply rails 72 can be other DC voltages, such as +130 VDC and -130 VDC, or from +28 VDC to +270 VDC.

In the exemplary embodiment, EMACs 44 for the left and right inner brakes are powered at least in part by the DC supply voltage provided across the supply rails 72L. In like manner, EMACs 44 for the left and right outer brakes receive operating power at least in part from the DC supply voltage provided across the supply rails 72R. The operating power provided on the supply rails 72L and 72R and the EMACs 44 are designed so as to allow the EMACs 44 to control and operate the brake actuators 34 to provide braking action of the wheels 36. The particular design is not germane to the invention, and therefore will not be discussed in detail herein. However, a person having ordinary skill in the art will readily appreciate the manner for carrying out such design based on the disclosure herein.

According to the present invention, the first capacitor bank 64 is electrically coupled across the supply rails 72L. Likewise, the second capacitor bank 66 is electrically coupled across the supply rails 72R. As a result, the DC supply voltages provided across the supply rails 72L and 72R serve to charge the first and second capacitor banks 64 and 66, respectively, to the level of the DC supply voltage. Electrical energy is thereby stored in the first and second capacitor banks 64 and 66, and serves as a back-up energy source should power fail on either of the power busses 60L or 60R.

For example, in the event power on the power buss 60L was to fail due to engine failure, faulty wiring, etc., the first capacitor bank 64 would present the desired 120 VDC across the supply rails 72L. Such power could then be used by the EMACs 44 to effect emergency braking of the left and right inner wheels 36. Similarly, if the power buss 60R was to fail, the second capacitor bank 64 would present the desired 120 VDC across the supply rails 72R. The power could then be used by the EMACs 44 to effect emergency braking of the left and right outer wheels 36.

Sizing of the first and second capacitor banks 64 and 66 will depend of course on the operating requirements of the system 30. Specifically, depending on the type of vehicle, size, actuator design, etc., the system 30 will typically require a given amount of electrical power on the supply rails 72L and 72R for a given amount of time. Such amounts may be determined theoretically or empirically as will be readily understood by those having ordinary skill in the art. In the case of an aircraft where size and weight may be critical, the first and second capacitor banks 64 and 66 are sized so as to store sufficient back-up electrical energy to allow the braking system to effect sufficient braking for at least one rejected take off. More preferably, the first and second capacitor banks 64 and 66 are sized to provide sufficient energy needed for a complete stop including anti-skid brake control and braking for ground maneuvering after the stop.

As an example, each capacitor bank 64 and 66 may be sized to provide approximately 18 watt hours (Wh) energy which is sufficient to provide braking power for a rejected take off. The approximate weight for such a capacitor bank is twelve pounds and may have a charge time of approximately two minutes. Each capacitor bank 64 may be made up of one or more capacitors. Multiple capacitors could be connected in parallel and/or series as will be appreciated.

The particular capacitance-voltage combination, i.e., total stored energy, offered by the capacitor bank(s) in a given application would preferably be optimized for the given application as will be appreciated.

In the exemplary embodiment, the BSCUs 40 also are powered at least in part by the voltage across the supply rails 72L and/or 72R. Consequently, even if the power was to fail on either of the power busses 60L or 60R, the BSCUs 40 could provide brake control functions, antiskid control functions, etc., based on the back-up energy stored in the capacitor banks 64 and/or 66. In FIG. 2, the BSCUs 40 are shown as being powered by the supply rails 72L but it will be appreciated that other configurations are possible without departing from the scope of the invention.

According to another aspect of the invention, the electrical energy back-up system 62 further includes a charger 78 which receives power from each of the power busses 60L and 60R (in the event one power buss was to fail). The charger 78 outputs a charging current to a rechargeable battery 80 also included in the back-up system 62. In the exemplary embodiment, the output of the rechargeable batter 80 is coupled to each of the supply rails 72L and 72R via reverse polarity protection diodes 82.

During parking brake conditions, the vehicle may be parked for extended periods of time and there may be no power provided on the power busses 60L and 60R. Nevertheless, it may be desirable/necessary to still provide power within the system 30 in order to effect and/or maintain parking brake operations. In such cases of prolonged periods without power on the power busses 60L and 60R, the energy stored in the capacitor banks 64 and 66 may not be sufficient and/or may tend to dissipate. The rechargeable battery 80 is useful in such condition to maintain and deliver sufficient power to the EMACs 44 to engage and/or maintain parking brake operation.

A variety of types of rechargeable battery 80 may be utilized in accordance with the invention. In an exemplary embodiment, the battery 80 is a 28V rechargeable lithium battery.

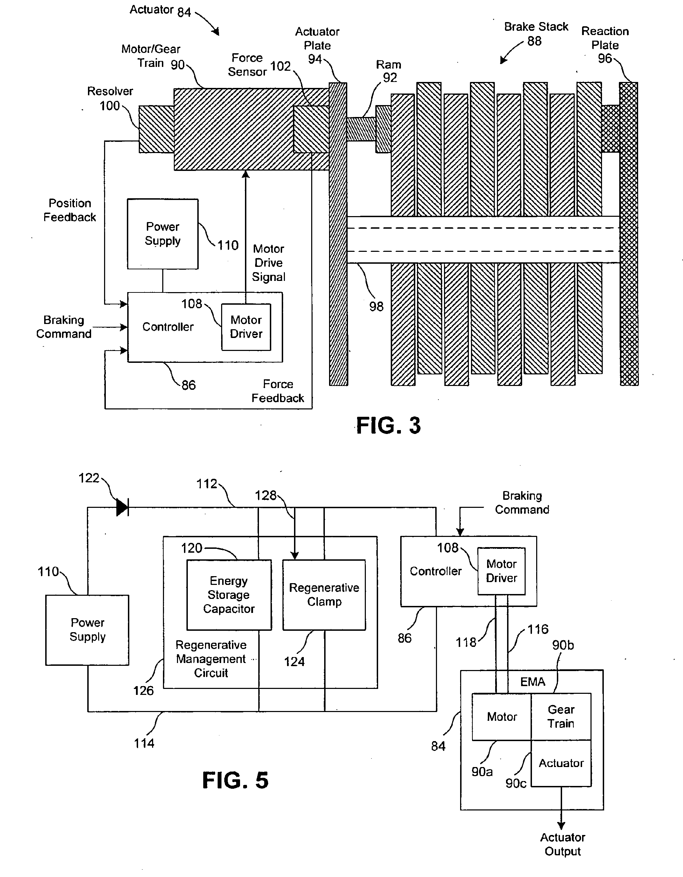

With additional reference to FIG. 3, illustrated is a schematic view of an electromechanical brake actuator 84 and electromechanical actuator controller (EMAC) 86 that can form a part of the system 30 (FIGs. 1 and 2). For example, the EMAC 44 can be implemented with the EMAC 86. The electromechanical brake actuator 84 can be referred to simply as an electromechanical actuator 84 or simply as an actuator 84. The EMAC 86 can be referred to simply as a controller 86.

The electromechanical actuator 84 is configured to exert a controlled brake force on a multiple disk brake stack 88. In the exemplary embodiment, the brake stack 88 is associated with the wheel 36 (FIGs. 1 and 2) of the aircraft 32 (FIG. 1) to provide braking in response to pilot commands and/or anti-skid commands. However, it will be appreciated that the present invention is not limited to an aircraft and has application to braking of virtually any type of vehicle. In the illustrated embodiment, the brake stack 88 includes rotor disks that are keyed to the wheel 36 for rotation therewith. The disks that rotate with the wheel 36 are interleaved with stator disks that do not rotate with the wheel 36. Compression of the interleaved set of disks effects braking of the wheel 36.

The actuator 84 includes a motor and gear train 90 that drives an actuator ram 92 in an axial direction. The actuator 84 is mounted to an actuator plate 94 through which the actuator ram 92 extends. The brake stack 88 is positioned between the actuator plate 94 and a reaction plate 96. In order to exert a braking force, the motor and gear train 90 is controlled by the controller 86 to cause the actuator ram 92 to extend towards the brake stack 88. In this manner, a clamp or brake force is exerted on the brake stack 88 between the actuator ram 92 and the reaction plate 96. Torque is taken out by the brake stack 88 through a torque tube 98 or the like.

In order to release a braking force, the controller 86 controls the motor and gear train 90 to drive the actuator ram 92 in the reverse direction away from the brake stack 88. In the event of no braking, it is desirable to provide a predefined running clearance between the brake stack engagement surface of the actuator ram 92 and the brake stack 88. Accordingly, the controller 86 controls the motor and gear train 90 to provide the desired running clearance when braking is not commanded.

The controller 86 receives as an input in the form of an input signal, such as a force or braking command signal. The value of the command signal is typically proportional based on the degree to which the pilot has depressed a corresponding brake pedal. In the event of light braking, the command signal may have a low value that causes the controller 86 to drive the motor and gear train 90 such that the actuator ram 92 exerts a light brake force on the brake stack 88. Similarly, in the event of heavy braking the command signal may have a high value that causes the controller 86 to drive the motor and gear train 90 such that the actuator ram 92 exerts a heavy brake force on the brake stack 88. In addition, or in the alternative, the command signal may be based on the results of an anti-skid control algorithm carried out by the controller 86 or elsewhere within the aircraft 32, such as in the BSCU 40 (FIG. 1).

As shown in FIG. 3, the actuator 84 includes a position sensing device, such as the illustrated resolver 100. The output of the resolver 100 provides relative feedback data that can be converted to a position value of the ram 92. Alternatively, the positioning sensing device can output a value directly indicative of the position of the actuator ram 92. The resolver 100 provides a position feedback signal that is input to the controller 86 for performing position based control of the actuator 84.

In the exemplary embodiment in which the position sensor is the resolver 100, the resolver 100 senses the rotor position of the motor in the motor and gear train 90. Based on the output of the resolver 100, the controller 86 is able to detect the direction and number of revolutions of the rotor. Since the ratio of the gear train in combination with the actuator ram 92 is known, the controller 86 is able to compute the relative position of the actuator ram 92 based on the output of the resolver 100.

According to the exemplary embodiment, the motor within the motor and gear train 90 is a brushless DC motor. Consequently, the controller 86 also utilizes the output of the resolver 100 to determine the appropriate phasing of the power signals provided to the motor via the motor drive signal to provide a desired motor commutation. In this manner, there is no need for separate position sensors for the DC motor and the actuator ram 92, respectively.

It will be appreciated that the position sensor need not be a resolver associated with a brushless DC motor. The position sensor may be another type of position sensor for sensing the position of the actuator ram 92 including, but not limited to, an LVDT sensor, etc. Similarly, although the position sensor as described herein provides relative positioning, it will be appreciated that the sensor in another embodiment may detect absolute position.

The actuator 84 further includes a force sensor 102 that detects the force exerted by the actuator ram 92 onto the brake stack 88. The output of the force sensor 102 is fed back as a force feedback signal and is input to the controller 86 for performing force based control over the actuator 84. The force sensor 102 may be any type of known force sensor including, but not limited to, a force load cell or the like.

In the brake system of FIG. 3, for sake of simplicity, only a single actuator 84 is shown for applying a brake force to the brake stack 88. However, it will be appreciated that typically the system will include multiple, identically operated actuators 84 spaced apart on the actuator plate 94 and each for exerting brake force to the brake stack 88. Each actuator 84 may have its own position sensor 100 and force sensor 102 that provide feedback signals to the controller 86.

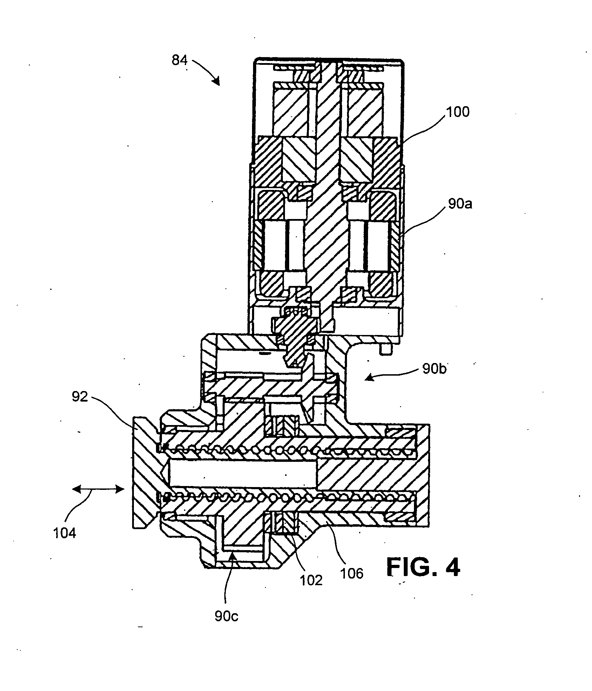

With additional reference to FIG. 4, the exemplary actuator 84 is shown in cross-section. The actuator 84 includes a motor 90a with an integral resolver position sensor 100. The motor 16a drives a gear train 90b, which, in turn, drives a ballscrew assembly 90c. The ballscrew assembly 90c drives the actuator ram 92 back and forth in the axial direction of arrow 104 so as to exert a force on the brake stack 88 (FIG. 3).

Reaction of the ballscrew assembly 90c, which corresponds to load reaction force of the actuator ram 92, is taken out through the force sensor 102 and into an actuator housing 106 and then into the actuator plate 94. In the illustrated embodiment, the force sensor 102 is a force load cell located between the ballscrew assembly 90c and the actuator housing 106. In this manner, the output of the force sensor 102 is indicative of the brake force applied by the actuator ram 92 to the brake stack 88.

With continuing reference to FIGs. 3 and 4, the controller 86 uses a closed loop feedback arrangement to generate the motor drive signal in accordance with the input braking command. For example, the controller can use force and/or position compensation to convert the input braking command into a current command. A motor driver 108 converts the current command into the motor drive signal with sufficient current to drive the motor 90a as desired, including generating sufficient torque to exert a desired amount of braking force on the brake stack 88 with the actuator ram 92. An example description of the operation of the controller 86 can be found in U.S. Patent Application Serial No. 11/145,138, filed June 3, 2005.

Operational electrical power for motor drive signal generation by the motor driver 108 can be derived from a power supply 110. The power supply 110 can be any suitable power source available from the aircraft 32. For instance, with reference to FIG. 2, the power supply 110 can be the power busses 60 following conversion by the converters 68 and 70. Alternatively, the power supply 110 can be a battery (e.g., battery 80), an independent power generator or combination of sources where one source supplements for another if the first were to fail to supply power.

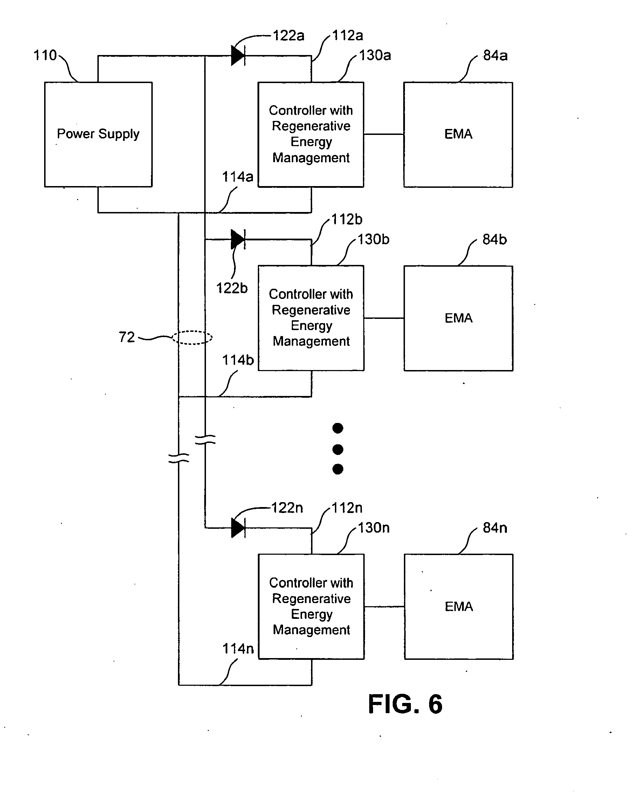

With additional reference to FIG. 5, the power supply 110 is operatively coupled to the controller 86 using a first local conductor 112 and a second local conductor 114. In one embodiment, the local conductors 112, 114 are implemented with the supply rails 72 shown in FIG. 2 or with a branch of the supply rails 72. In another embodiment, as will be described below with respect to FIG. 6, the local conductors 112, 114 for each of a plurality of controllers are coupled to the supply rail 72.

The motor driver 108 of the controller 86 is operatively coupled to motor 90a with a first armature conductor (armature one) 116 and a second armature conductor (armature two) 118. Motor current, in the form of the motor drive signal, is delivered to the motor over the armature conductors 116, 118.

Connected in parallel with the controller 86, and particularly the motor driver 108 of the controller 86, is a capacitive energy storage device 120, which is preferably a capacitor. Accordingly, for purposes of the description herein, the energy storage device 120 also will be referred to as capacitor 120. The capacitor 120 can be one suitably sized capacitor or a bank of capacitors that effectively behave as a single capacitor of suitable size. In one embodiment, the capacitor 120 is implemented with one or both of the capacitors 64, 66 shown in FIG. 2. In other embodiments, the capacitors 64, 66 are omitted in favor of capacitor 120. In yet another embodiment, capacitor 120 supplements capacitors 64, 66.

The capacitor 120 capacitively stores electrical energy that can be used in the generation of the motor drive signal. Storage of electrical energy by the capacitor 120 generally occurs in two situations. The first is the same as the situation described with respect to FIG. 2. In particular, when the voltage from the power supply 110 is higher than the voltage of the capacitor 120, the capacitor 120 will store charge derived from the power supply 110 until the voltage of the capacitor 120 is the same as or about the same as the voltage of the power supply 110.

The second situation in which the capacitor 120 will store charge occurs when electrical energy generated by the motor 90a is passed back over armature conductors 116, 118 to the motor driver 108 that, in turn, couples the generated electrical energy as a voltage across the conductors 112, 114.

Electrical energy generated by the motor 90a will be referred to herein as regenerative electrical energy. Regenerative electrical energy can be developed as the result of at least two situations. The first situation results from inertia of the rotor of the motor 90a. For instance, if the motor 90a is commanded to stop quickly, the motor 90a may generate some electric energy before the rotor stops. The second situation results from the dynamics of the brake stack 88. The brake stack 88 can behave in a similar manner to a spring when compressed by the compressive force of the actuator ram 92. When the actuator ram 92 is retracted, the brake stack can release the stored energy and drive the actuator ram 92 backward, which drives the ballscrew assembly 90c, the gear train 90b and the motor 90b backward. As will be appreciated, the actuator 84 is capable of being back driven. That is, the ballscrew assembly 90c, the gear train 90b and the motor 90b are back-drivable. Back driving the actuator 84 can result in the generation of regenerative energy by the by the motor 90a.

Regenerative energy produced by the motor 90a can be coupled to place a corresponding voltage potential across the conductors 112 and 114. For example, the controller 86 can be a four quadrant controller where regenerative electrical energy is returned back toward the power supply 110.

When the regenerative energy invokes a voltage across the conductors 112, 114 that is greater than the voltage of the capacitor 120, the capacitor 120 will charge (e.g., store the regenerative energy) until the voltage of the capacitor 120 is the same as or about the same as the voltage across the conductors 112, 114. Often, the voltage attained in the presence of regenerative electrical energy will be higher than the voltage of the power supply 110. Accordingly, the voltage of the capacitor 120 after storing regenerative energy may be higher than the power supply 110 voltage. A reverse polarity protection diode 122 can be connected in series between the power supply 110 and conductor 112. The diode 122 can minimize the chance that the voltage of the regenerative electrical energy or the voltage of the capacitor, when either is higher than the power supply 110 voltage, will be seen at the power supply 110 or other items connected to the power supply 110, which could lead to damage of the power supply 110 or the other items.

When the voltage of the capacitor 120 is higher than the voltage supplied by the power supply 110, the capacitor 120 can supply stored energy to the controller 86 for motor drive signal generation. At least two circumstances may exist when stored energy from the capacitor 120 is used, at least in part, for motor drive signal generation. The first situation is where the voltage of the power supply 110 drops, including a complete failure of the power supply as described above or a partial drop in power supply 110 voltage. In that case, the voltage of the capacitor 120 can be higher than the power supply 110 voltage and energy from the capacitor 120 can be suppled to the controller 86 when power is needed for motor drive signal generation. As power is supplied by the capacitor 120 to the controller 86 and the voltage of the capacitor 120 drops to be the same as or about the same as the power supply 110 voltage, or if the power supply 110 recovers, then stored charge will no longer be supplied by the capacitor 120. If available, electrical energy from the power supply 110 will then be supplied to the controller 86 for motor drive signal generation.

The second situation is where regenerative energy charges the capacitor 120 to have a voltage higher than the power supply 110 voltage. In that case, the voltage of the capacitor 120 can be higher than the power supply 110 voltage and energy from the capacitor 120 can be supplied to the controller 86 when power is needed for motor drive signal generation. As power is supplied by the capacitor 120 to the controller 86 and the voltage of the capacitor 120 drops to be the same as or about the same as the power supply 110 voltage, then stored charge will no longer be supplied by the capacitor. Electrical energy from the power supply 110 will then be supplied to the controller 86 for motor drive signal generation.

As will be appreciated, the storage of energy by the capacitor 120 is automatic when the voltage potential of the capacitor 120 is lower than the voltage across the conductors 112 and 114. Similarly, the availability of stored energy to the controller 86 from the capacitor 120 is automatic when the voltage potential of the stored electrical energy in the capacitor 120 is higher than the DC supply voltage. The actual drawing of energy from the capacitor 120 when the voltage potential of the stored electrical energy is higher than the DC supply voltage may be based on the need to operate the motor 90a. It will be further appreciated, that in the illustrated embodiment that the supply of stored energy to the controller 86 from the capacitor 120 is made without switching between the capacitor 120 and the power supply 110.

As indicated above, the energy stored by the capacitor 120 can serve as a power backup to the power supply 110. In addition, regenerative energy generated by conversion of mechanical energy of the electromechanical braking system to electrical energy that is coupled to the conductor 112 can offer a "power boost" to a subsequent application of braking force. For example, during anti-skid operation of the electromechanical braking system, the ram 92 is intermittently actuated (e.g., cyclically actuated, alternately actuated or repeatedly actuated) between compressions of and retractions from the brake stack at about 10 Hz, where one compression and retraction pair is referred to as a cycle. During the retraction of one or more cycles, regenerative energy may be produced and stored. Thereafter, during the compression of one or more subsequent cycles, the stored energy can avail more electrical power than if regenerative energy had not been stored.

With continuing reference to FIG. 5, a regenerative clamp 124 is connected in parallel with the capacitor 120. The regenerative clamp 124 together with the capacitor 120 form a regenerative management circuit 126. The regenerative clamp 124 is configured to limit voltage transients across the capacitor 120. For example, the regenerative clamp 124 can dissipate regenerative electrical energy if the voltage across the conductors 112 and 114 exceeds a predetermined value. In one embodiment, the regenerative clamp 124 includes a resistive element (e.g., a resistor) to convert electrical energy into heat. The resistor can be switched to the conductor 112 using, for example, a solid state switch, such as a power FET or IGBT. A sense line 128 connected to the conductor 112 can be used to activate the switching at the predetermined value.

The energy storage capacity of the capacitor 120, the energy dissipation capacity of the regenerative clamp 124 and the switching point of the regenerative claim 124 can be coordinated such that regenerative energy is managed in a desired fashion. For example, energy storage and heat generation can be optimized or balanced with other factors, such as size and weight of the regenerative management circuit 126.

In the embodiment of FIG. 5, the controller 86 is configured to receive power for the electrical drive signal from the conductor 112. The conductor 112, along with any other appropriate conductors and any other appropriate circuit elements (e.g., the diode 122, a resistor, etc.), couples the controller 86 to the power supply 110. In addition, the capacitor 120 is configured to store electrical energy from the conductor 112 and supply stored energy to the controller 86 for electrical drive signal generation when a voltage potential of the stored electrical energy is higher than the DC supply voltage. Accordingly, the conductor 112 can be any conductive component or electrical pathway with which the power supply 110, controller 86 and capacitor 120 can be operatively configured to result in these energy management functions. The conductor 112 can be a power rail, a cable, a terminal of the controller 86 or motor driver 108, or any other suitable component that is internal or external to the controller 86 or other functional component.

In one embodiment, such as shown in figure 6, a controller 130 includes the regenerative energy management devices, such as the capacitor 120 and/or the regenerative clamp 124. For example, the capacitor 120 and/or regenerative clamp 124 may be housed with the controller 86 components, such as the motor driver 108, logic execution circuitry, etc. In this embodiment, the conductor 112 that enables the above-described power management functions may be internal to the controller 130 or external to the controller 130.

With continued reference to FIG. 6, the power supply 110 is coupled to place a DC voltage across a pair of conductors that comprise the buss 72. Plural controllers 130a-n are connected to the buss 72 with corresponding conductors 112a-n and 114a-n. It will be appreciated that the controller 86 and regenerative management circuit 126 in the embodiment of FIG. 5 can be used instead of the controllers 130 in the embodiment of FIG 6, and vice-versa. Reverse polarity protection diodes 122a-n can be connected between the buss 72 and corresponding conductors 112a-n to protect the power supply 110 and other connected devices from voltages present across the conductors 112 and 114. Each controller 130a-n can be connected to drive a corresponding electromechanical actuator 84a-n.

In one embodiment, one of the regenerative management circuits 126 (FIG. 5) or the controllers 130 (FIG. 6) can be configured to drive and/or supply stored electrical energy to multiple electromechanical actuators 84.

Although the invention has been shown and described with respect to certain preferred embodiments, it is obvious that equivalents and modifications will occur to others skilled in the art upon the reading and understanding of the specification. For example, although the present invention has been described primarily in the context of an aircraft, it will be appreciated that the invention has utility in any type of vehicle utilizing electromechanical braking. The invention is not intended to be limited to an aircraft in its broadest sense. Therefore, the present invention includes all such equivalents and modifications, and is limited only by the scope of the following claims.

## Claims

1. An electromechanical braking system (30) for effecting braking of a wheel (36) of an vehicle, comprising:
- an electromechanical actuator controller (44) that generates an electrical drive signal for an electromechanical actuator (84) in response to a braking command, the electromechanical actuator controller configured to receive power for the electrical drive signal from a conductor (72,112,114) that couples the electromechanical actuator controller to a DC supply voltage power source (110) and the electromechanical actuator controller configured to receive regenerative electrical energy from the electromechanical actuator and couple the regenerative electrical energy to the conductor;
**characterised by** further comprising:
- a capacitive energy storage device (64,66,120) configured to store the regenerative electrical energy that has been coupled to the conductor; and
- an electromechanical actuator (84) that converts the electrical drive signal to mechanical braking force applied to a brake disk stack (88).

2. The electromechanical braking system of claim 1, wherein the capacitive energy storage device supplies stored regenerative electrical energy to the electromechanical actuator controller for electrical drive signal generation when a voltage potential of the stored electrical energy is higher than the DC supply voltage.

3. The electromechanical braking system of claim 2, wherein the supply of stored energy to the electromechanical actuator controller from the capacitive energy storage device is automatic when the voltage potential of the stored electrical energy is higher than the DC supply voltage.

4. The electromechanical braking system of claim 2, wherein the supply of stored energy to the electromechanical actuator controller from the capacitive energy storage device is made without switching between the capacitive energy storage device and the power source of the DC supply voltage.

5. The electromechanical braking system of any of claims 1 to 4, wherein the electromechanical actuator is back-drivable.

6. The electromechanical braking system of any of claims 1 to 5, wherein the vehicle comprises an aircraft.

7. The electromechanical braking system of any of claims 1 to 6, wherein the capacitive energy storage device is at least one capacitor connected in parallel with a motor driver (108) of the electromechanical actuator controller.

8. The electromechanical braking system of any of claims 1 to 7, further comprising a reverse polarity protection device (122) to reduce application of regenerative electrical energy or stored electrical energy to the power source.

9. The electromechanical braking system of any of claims 1 to 8, further comprising a regenerative clamp (124) configured to dissipate regenerative electrical energy exceeding a predetermined threshold.

10. The electromechanical braking system of any of claims 1 to 9, wherein the stored regenerative electrical energy is generated and reused during an anti-skid operation of the electromechanical braking system.

11. The electromechanical braking system of claim 10, wherein during the anti-skid operation the electrical drive signal controls the electromechanical actuator to intermittently apply a braking force and retract, and the regenerative electrical energy is generated during at least one retraction and the stored electrical energy is supplied to support a subsequent braking force application.

12. An electromechanical braking system (30) for effecting braking of a wheel (36) of an vehicle, comprising:
- an electromechanical actuator controller (44) that generates an electrical drive signal for an electromechanical actuator (84) in response to a braking command, the electromechanical actuator controller configured to receive power for the electrical drive signal from a conductor (72,112,114) that couples the electromechanical actuator controller to a DC supply voltage power source (110) and the electromechanical actuator controller configured to receive regenerative electrical energy from the electromechanical actuator and couple the regenerative electrical energy to the conductor; and
- a capacitive energy storage device (64,66,120) configured to store the regenerative electrical energy that has been coupled to the conductor; and **characterised in that**
- the vehicle comprises an aircraft.

13. The electromechanical braking system of claim 12, wherein the capacitive energy storage device supplies stored regenerative electrical energy to the electromechanical actuator controller for electrical drive signal generation when a voltage potential of the stored electrical energy is higher than the DC supply voltage.

14. A method of providing braking in an electromechanical braking system (30) for an aircraft that includes an electromechanical actuator controller (44) configured to receive power from a conductor (72, 12,114) that couples the electromechanical actuator controller and a DC supply voltage power source (110), comprising:
- generating an electrical drive signal with the electromechanical actuator controller for an electromechanical actuator (84) in response to a braking command using power from the conductor;
**characterised by** further comprising:
- converting the electrical drive signal with the electromechanical actuator into mechanical braking force and applying the mechanical braking force to a brake disk stack (88); and
- capacitively storing regenerative electrical energy from the electromechanical actuator.

15. The method of claim 14, further comprising supplying stored regenerative electrical energy to the electromechanical actuator controller for electrical drive signal generation when a voltage potential of the stored electrical energy is higher than the DC supply voltage.

## Patentansprüche

1. Elektromechanisches Bremssystem (30) zum Bewirken des Bremsens eines Fahrzeugrades (36), mit:
- einem Controller (44) für ein elektromechanisches Stellglied, welcher ein elektrisches Antriebssignal für ein elektromechanisches Stellglied (84) in Reaktion auf einen Bremsbefehl erzeugt, wobei der Controller für das elektromechanische Stellglied derart konfiguriert ist, dass er Energie für das elektrische Antriebssignal von einem Leiter (72, 112, 114) empfängt, welcher den Controller für das elektromechanische Stellglied mit einer Versorgungsgleichspannungsenergiequelle (110) verbindet, und wobei der Controller für das elektromechanische Stellglied derart konfiguriert ist, dass er elektrische Rekuperationsenergie von dem elektromechanischen Stellglied empfängt und die elektrische Rekuperationsenergie mit dem Leiter koppelt;
**dadurch gekennzeichnet, dass** es ferner aufweist:
- eine kapazitive Energiespeichervorrichtung (64, 66, 120), die zum Speichern der mit dem Leiter gekoppelten elektrischen Rekuperationsenergie konfiguriert ist; und
- ein elektromechanisches Stellglied (84), welches das elektrische Antriebssignal in auf einen Bremsscheibenstapel (88) aufgebrachte mechanische Bremskraft umwandelt.

2. Elektromechanisches Bremssystem nach Anspruch 1, bei welchem die kapazitive Energiespeichervorrichtung gespeicherte elektrische Rekuperationsenergie an den Controller für das elektromechanische Stellglied zur Erzeugung eines elektrischen Antriebssignals liefert, wenn das Spannungspotential der gespeicherten elektrischen Energie höher als die Versorgungsgleichspannung ist.

3. Elektromechanisches Bremssystem nach Anspruch 2, bei welchem die Lieferung gespeicherter Energie von der kapazitiven Energiespeichervorrichtung an den Controller für das elektromechanische Stellglied automatisch erfolgt, wenn das Spannungspotential der gespeicherten elektrischen Energie höher als die Versorgungsgleichspannung ist.

4. Elektromechanisches Bremssystem nach Anspruch 2, bei welchem die Lieferung gespeicherter Energie von der kapazitiven Energiespeichervorrichtung an den Controller für das elektromechanische Stellglied ohne umschalten zwischen der kapazitiven Energiespeichervorrichtung und der Energiequelle der Versorgungsgleichspannung erfolgt.

5. Elektromechanisches Bremssystem nach einem der Ansprüche 1 bis 4, bei welchem das elektromechanische Stellglied rückwärts antreibbar ist.

6. Elektromechanisches Bremssystem nach einem der Ansprüche 1 bis 5, bei welchem das Fahrzeug ein Flugzeug umfasst.

7. Elektromechanisches Bremssystem nach einem der Anspruche 1 bis 6, bei welchem die kapazitive Energiespeichervorrichtung mindestens ein Kondensator ist, welcher mit einem Motortreiber (108) des Controllers für das elektromechanische Stellglied parallel verbunden ist.

8. Elektromechanisches Bremssystem nach einem der Ansprüche 1 bis 7, ferner mit einer Verpolungsschutzvorrichtung (122) zur Verringerung des Anlegens elektrischer Rekuperationsenergie oder gespeicherter elektrischer Energie an die Energiequelle.

9. Elektromechanisches Bremssystem nach einem der Ansprüche 1 bis 8, ferner mit einer Rekuperationsklemme (124), welche zum Ableiten elektrischer Rekuperationsenergie, die einen vorbestimmten Schwellenwert übersteigt, konfiguriert ist.

10. Elektromechanisches Bremssystem nach einem der Ansprüche 1 bis 9, bei welchem die gespeicherte elektrische Rekuperationsenergie während einer Anti-Rutsch-Operation des elektromechanischen Bremssystems erzeugt und verwendet wird.

11. Elektromechanisches Bremssystem nach Anspruch 10, bei welchem, während der Anti-Rutsch-Operation, das elektrische Antriebssignal das elektromechanische Stellglied derart steuert, dass dieses intermittierend eine Bremskraft aufbringt und sich zurückzieht, und die elektrische Rekuperationsenergie während mindestens eines Rückzugs erzeugt wird und die gespeicherte elektrische Energie geliefert wird, um ein nachfolgendes Aufbringen von Bremskraft zu unterstützen.

12. Elektromechanisches Bremssystem (30) zum Bewirken des Bremsens eines Fahrzeugrades (36), mit:
- einem Controller (44) für ein elektromechanisches Stellglied, welcher ein elektrisches Antriebssignal für ein elektromechanisches Stellglied (84) in Reaktion auf einen Bremsbefehl erzeugt, wobei der Controller für das elektromechanische Stellglied derart konfiguriert ist, dass er Energie für das elektrische Antriebssignal von einem Leiter (72, 112, 114) empfängt, welcher den Controller für das elektromechanische Stellglied mit einer Versorgungsgleichspannungsenergiequelle (110) verbindet, und wobei der Controller für das elektromechanische Stellglied derart konfiguriert ist, dass er elektrische Rekuperationsenergie von dem elektromechanischen Stellglied empfängt und die elektrische Rekuperationsenergie mit dem Leiter koppelt; und
- einer kapazitiven Energiespeichervorrichtung (64, 66, 120), die zum Speichern der mit dem Leiter gekoppelten elektrischen Rekuperationsenergie konfiguriert ist; und
**dadurch gekennzeichnet, dass**
- das Fahrzeug ein Flugzeug umfasst.

13. Elektromechanisches Bremssystem nach Anspruch 12, bei welchem die kapazitive Energiespeichervorrichtung gespeicherte elektrische Rekuperationsenergie an den Controller für das elektromechanische Stellglied zur Erzeugung eines elektrischen Antriebssignals liefert, wenn das Spannungspotential der gespeicherten elektrischen Energie höher als die Versorgungsgleichspannung ist.

14. Verfahren zum Bewirken des Bremsens in einem elektromechanischen Bremssystem (30) für ein Flugzeug, das einen Controller (44) für ein elektromechanisches Stellglied aufweist, welcher derart konfiguriert ist, dass er Energie von einem Leiter (72, 112, 114) erhält, welcher den Controller für das elektromechanische Stellglied mit einer Versorgungsgleichspannungsenergiequelle (110) verbindet, mit dem Schritt:
- des Erzeugens eines elektrischen Antriebssignals für ein elektromechanisches Stellglied (84) mittels des Controllers für das elektromechanische Stellglied in Reaktion auf einen Bremsbefehl unter Verwendung von von dem Leiter kommender Energie;
**dadurch gekennzeichnet, dass** es ferner die folgenden Schritte aufweist:
- Umwandeln des elektrischen Antriebssignals mittels des elektromechanischen Stellglieds in mechanische Bremskraft und Aufbringen der mechanischen Bremskraft auf einen Bremsscheibenstapel (88); und
- kapazitives Speichern elektrischer Rekuperationsenergie des elektromechanischen Stellglieds.

15. Verfahren nach Anspruch 14, ferner mit dem Liefern gespeicherter elektrischer Rekuperationsenergie an den Controller für das elektromechanische Stellglied zur Erzeugung eines elektrischen Antriebssignals, wenn das Spannungspotential der gespeicherten elektrischen Energie höher als die Versorgungsgleichspannung ist.

## Revendications

1. Système de freinage électromécanique (30) pour effectuer le freinage d'une roue (36) d'un véhicule, comprenant:
- un contrôleur (44) d'un actionneur électromécanique, générant un signal d'entraînement électrique pour un actionneur électromécanique (84) en réaction à une commande de freinage, ledit contrôleur de l'actionneur électromécanique étant configuré pour recevoir de l'énergie pour le signal électrique d'entraînement à partir d'un conducteur (72, 112, 114) qui raccorde ledit contrôleur de l'actionneur électromécanique à une source d'alimentation en tension continue (110), et ledit contrôleur de l'actionneur électromécanique étant configuré de manière à ce qu'il reçoive de l'énergie électrique de récupération á partir de l'actionneur électromécanique et couple l'énergie électrique de récupération au conducteur;
**caractérisé en ce qu'**il comprend en outre:
- un dispositif capacitif de stockage d'énergie (64, 66, 120) configuré pour stocker l'énergie électrique de récupération couplée au conducteur; et
- un actionneur électromécanique (84) qui convertit le signal électrique d'entraînement en une force de freinage mécanique appliquée sur une pile de disques de frein (88).

2. Système de freinage électromécanique selon la revendication 1, dans lequel le dispositif capacitif de stockage d'énergie fournit de l'énergie électrique de récupération stockée au contrôleur de l'actionneur électromécanique pour la génération dudit signal électrique d'entraînement, si le potentiel de tension de ladite énergie électrique stockée est supérieur à la tension continue d'alimentation.

3. Système de freinage électromécanique selon la revendication 2, dans lequel l'alimentation d'énergie stockée à partir dudit dispositif capacitif de stockage d'énergie audit contrôleur de l'actionneur électromécanique est automatique, si le potentiel de tension de ladite énergie électrique stockée est supérieur à la tension continue d'alimentation.

4. Système de freinage électromécanique selon la revendication 2, dans lequel l'alimentation d'énergie stockée à partir dudit dispositif capacitif de stockage d'énergie audit contrôleur de l'actionneur électromécanique est effectué sans commutation entre ledit dispositif capacitif de stockage d'énergie et la source de tension continue d'alimentation.

5. Système de freinage électromécanique selon l'une des revendications 1 à 4, dans lequel l'actionneur électromécanique peut être entraîné en sens inverse.

6. Système de freinage électromécanique selon l'une des revendications 1 à 5, dans lequel le véhicule comprend un aéronef.

7. Système de freinage électromécanique selon l'une des revendications 1 à 6, dans lequel ledit dispositif capacitif de stockage d'énergie est au moins un condensateur raccordé en parallèle à une commande moteur (108) dudit contrôleur de l'actionneur électromécanique.

8. Système de freinage électromécanique selon l'une des revendications 1 à 7, en outre comprenant un dispositif de protection contre l'inversement de polarité (122) afin de réduire l'application d'énergie électrique de récupération ou d'énergie électrique stockée à la source d'énergie.

9. Système de freinage électromécanique selon l'une des revendications 1 à 8, en outre comprenant une borne de récupération (124) configurée pour dissiper de l'énergie électrique de récupération dépassant un seuil prédéterminé.

10. Système de freinage électromécanique selon l'une des revendications 1 à 9, dans lequel l'énergie électrique de récupération stockée est générée et réutilisée pendant une opération d'anti-patinage du système de freinage électromécanique.

11. Système de freinage électromécanique selon la revendication 10, dans lequel, pendant l'opération d'anti-patinage, ledit signale électrique d'entraînement commande ledit actionneur électromécanique d'appliquer une force de freinage et se retirer de manière intermittente, et l'énergie électrique de récupération est générée pendant au moins un retour et l'énergie électrique stockée est fournie afin de supporter une application suivante de la force de freinage.

12. Système de freinage électromécanique (30) pour effectuer le freinage d'une roue (36) d'un véhicule, comprenant:
- un contrôleur (44) d'un actionneur électromécanique, générant un signal d'entraînement électrique pour un actionneur électromécanique (84) en réaction à une commande de freinage, ledit contrôleur de l'actionneur électromécanique étant configuré pour recevoir de l'énergie pour le signal électrique d'entraînement à partir d'un conducteur (72, 112, 114) qui raccorde ledit contrôleur de l'actionneur électromécanique à une source d'alimentation en tension continue (110), et ledit contrôleur de l'actionneur électromécanique étant configuré de manière à ce qu'il reçoive de l'énergie électrique de récupération à partir de l'actionneur électromécanique et couple l'énergie électrique de récupération au conducteur; et
- un dispositif capacitif de stockage d'énergie (64, 66, 120) configuré pour stocker l'énergie électrique de récupération couplée au conducteur; et
**caractérisé en ce que**
- le véhicule comprend un aéronef.

13. Système de freinage électromécanique selon la revendication 12, dans lequel le dispositif capacitif de stockage d'énergie fournit de l'énergie électrique de récupération stockée au contrôleur de l'actionneur électromécanique pour la génération dudit signal électrique d'entraînement, si le potentiel de tension de ladite énergie électrique stockée est supérieur à la tension continue d'alimentation.

14. Procédé de freinage dans un système de freinage électromécanique (30) pour un aéronef, comprenant un contrôleur (44) d'un actionneur électromécanique configuré pour recevoir de l'énergie à partir d'un conducteur (72, 112, 114) qui raccorde ledit contrôleur de l'actionneur électromécanique à une source d'alimentation en tension continue (110), comprenant:
- la génération d'un signal électrique d'entraînement par moyen dudit contrôleur de l'actionneur électromécanique (84) en réaction à une commande de freinage, utilisant de l'énergie provenant du conducteur;
**caractérisé en ce q**'il comprend en outre:
- la conversion, par moyen dudit actionneur électromécanique, du signal électrique d'entraînement en une force de freinage mécanique et l'application e ladite force de freinage mécanique sur une pile de disques de freins (88); et
- le stockage capacitif de l'énergie électrique de récupération provenant dudit actionneur électromécanique.

15. Procédé selon la revendication 14, en outre comprenant l'alimentation dudit contrôleur de l'actionneur électromécanique en énergie électrique de récupération pour la génération du signal électrique d'entraînement, si le potentiel de tension de ladite énergie électrique stockée est supérieur à la tension continue d'alimentation.
